# EUROPÄISCHE PATENTSCHRIFT

(11) **EP 1 594 086 B1**
(45) Veröffentlichungstag und Bekanntmachung des Hinweises auf die Patenterteilung: **12.09.2007**
(21) Anmeldenummer: 04101903.5
(22) Anmeldetag: 04.05.2004
(51) Int. Cl.: G06T 5/00, G03B 42/04, G01T 1/29, G06K 9/36

(54) **Verfahren zur Erfassung und Darstellung eines in einer Phosphorschicht gespeicherten Röntgenbildes**
Method of capturing and displaying a x-ray image stored in a phosphor sheet.
Procédé de détection et d'affichage d'une image radiographique enregistrée dans une couche de phosphore.

(43) Veröffentlichungstag der Anmeldung: 09.11.2005
(73) Patentinhaber: Agfa-Gevaert HealthCare GmbH, 51373 Leverkusen (DE)
(72) Erfinder: Brautmeier, Detlef, 85716 Unterschleissheim (DE); Dewaele, Piet, 9100 Sint-Niklaas (BE); Haug, Werner, 81825 München (DE); Scherer, Horst, 82008 Unterhaching (DE)

(56) Entgegenhaltungen:
- EP-A- 0 287 113
- EP-A- 1 315 030
- US-A- 4 851 678
- US-A- 6 061 465
- US-A1- 2002 109 113

## Beschreibung

Die Erfindung betrifft ein Verfahren zur Erfassung und Darstellung eines in einer Phosphorschicht gespeicherten Röntgenbildes.

Röntgenbilder können in sogenannten Speicherphosphoren gespeichert werden, wobei die durch ein Objekt, beispielsweise einen Patienten, hindurchtretende Röntgenstrahlung als latentes Bild in einer Phosphorschicht gespeichert wird. Zum Auslesen des latenten Bildes wird die Phosphorschicht mit Stimulationslicht bestrahlt und dabei zur Aussendung von Emissionslicht angeregt. Das Emissionslicht, dessen Intensität dem in der Phosphorschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

In einigen Anwendungsgebieten dieser - auch als Computer-Radiographie bezeichneten - Technologie ist aufgrund medizinischer Bestimmungen darauf zu achten, dass die in der Phosphorschicht gespeicherte Röntgeninformation zumindest im Bereich eines Randes der Phosphorschicht möglichst vollständig erfasst wird, damit ein Höchstmaß an diagnostischer Information zur Verfügung steht. Dies gilt beispielsweise in besonderem Maße für mammographische Anwendungen.

Bei bekannten Verfahren nach dem Stand der Technik werden Phosphorschichten daher möglichst exakt bis zu deren Rand gescannt, d.h. ausgelesen. Hierzu ist üblicherweise eine relativ aufwändige Steuerung des Scanners erforderlich. Gleichzeitig können bei den bekannten Verfahren größere Lagetoleranzen der Phosphorschicht relativ zum Scanner meist nicht ausreichend genau berücksichtigt werden, so dass es in einigen Fällen zu unerwünscht oder unzulässig hohen Verlusten an diagnostischer Information kommen kann.

US 2002/0109113 A1 offenbart ein Verfahren, bei welchem zur Ermittlung des Randes einer Phosphorplatte über diesen hinaus gescannt wird und die eindimensionale Ableitung des hierbei erhaltenen Bildes gebildet wird. Letzteres erfordert einen hohen Rechenaufwand bei der Bildung der jeweiligen Ableitungen, wodurch dieses Verfahren relativ langsam ist. Darüber hinaus wird bei der Bildung der Ableitungen der störende Einfluss des Signalrauschens stark erhöht, so dass die Zuverlässigkeit bei der Bestimmung des Phosphorplattenrandes herabgesetzt wird.

Aus US 6,061,465 ist ein Verfahren bekannt, bei welchem eine Phosphorplatte über das Bildfeld, in welchem ein Röntgenbild gespeichert ist, hinaus gescannt wird. Zur Ermittlung des Bildfeldrandes werden die Bildsignalkomponenten in ihrer Anzahl reduziert und daraus entlang radialer Linien, welche von der Mitte des aufgezeichneten Röntgenbildes ausgehen, ermittelt. Auch dieses Verfahren erfordert einen relativ hohen Rechen- und Zeitaufwand.

Es ist Aufgabe der Erfindung, ein Verfahren zur Erfassung und Darstellung eines in einer Phosphorschicht gespeicherten Röntgenbildes anzugeben, bei welchem möglichst die gesamte in der Phosphorschicht gespeicherte Röntgeninformation mit erhöhter Zuverlässigkeit erfasst und dargestellt werden kann.

Diese Aufgabe wird gemäß Anspruch 1 durch ein Verfahren mit folgenden Schritten gelöst :

Verfahren zur Erfassung und Darstellung eines in einer Phosphorschicht (1) gespeicherten Röntgenbildes (3) mit folgenden Schritten:
- Erfassung von Information (I(x, y)) im Bereich der Phosphorschicht (1) sowie in einem daran angrenzenden Bereich (2) außerhalb der Phosphorschicht (1), durch einen optischen Detektor, wobei die erfasste Information (I (x,y)) durch den Verlauf der Intensität des von dem Detektor erfassten Lichts repräsentiert wird;
- Aufteilung der erfassten Information (I(x, y)) in Bildinformation (11, 21, 31) und Randinformation (12, 32) unter Berücksichtigung des örtlichen Verlaufs der erfassten Information (I(x, y)) wobei
- die erfasste Information(I(x, y)) in eine Vielzahl von Zeilen (4) unterteilt wird,
- für jede der Zeilen (4) eine Zeilengrenze (x₀) ermittelt wird, welche die Information (I(x, y)) in der jeweiligen Zeile (4) in Zeilenbildinformation (11) und Zeilenrandinformation(12) aufteilt, wobei die entsprechenden Zeilengrenzen (x₀) jeweils für einen Intensitätswert (I₀) festgelegt werden, welcher den Mittelwert zwischen einer maximalen Intensität (Iₘₐₓ) und einer minimalen Intensität (Iₘᵢₙ) im betrachteten Verlauf der Information (I(x, y)) bildet, und
- aus den für die einzelnen Zeilen (4) ermittelten Zeilengrenzen(x₀) eine Bildgrenze (B) abgeleitet wird, welche die erfasste Information (I(x, y)) in die Bildinformation (11, 21, 31) und die Randinformation(12, 32) aufteilt, wobei damit die Bildinformation (11, 21, 31) der im Bereich der Phosphorschicht (1) erfassten Information (I(x, y)) und die Randinformation (12, 32) der im daran angrenzenden Bereich (2) außerhalb der Phosphorschicht (1) erfassten Information (I(x, y)) entspricht;
- Darstellung der Bildinformation (11, 21, 31), insbesondere in Negativdarstellung.

Die Erfindung basiert auf dem Gedanken, die Phosphorschicht über deren Rand hinaus zu scannen und dabei nicht nur die eigentliche, in der Phosphorschicht enthaltene Bildinformation, sondern auch Randinformation aus einem an die Phosphorschicht angrenzenden Bereich außerhalb der Phosphorschicht zu erfassen. Die Größe dieses an die Phosphorschicht angrenzenden Bereichs, der zusätzlich gescannt wird, ist dabei so groß gewählt, dass zu erwartende Lagetoleranzen der Phosphorschicht relativ zum Scanner innerhalb dieses Bereichs liegen. Die erfasste Information, die zunächst noch nicht in Bild- und Randinformation zu unterscheiden ist, wird dann in einen Bereich der Bildinformation sowie einen Bereich der Randinformation unterteilt. Diese Aufteilung erfolgt erfindungsgemäß in Abhängigkeit des Verlaufs der erfassten Information im Bereich des Randes der Phosphorschicht.

Dabei wird die erfasste Information durch den Verlauf der Intensität des beim Scanvorgang erfassten Lichts repräsentiert, so dass insbesondere eine Intensitätsänderung von bestimmter Größe auf den Rand der Phosphorschicht schließen lässt und eine entsprechende Aufteilung in Bild- und Randinformation ermöglicht. Die auf diese Weise gewonnene Bildinformation wird dann, vorzugsweise in Negativdarstellung, dargestellt und steht für eine diagnostische Analyse zur Verfügung.

Das erfindungsgemäße Verfahren erlaubt eine sehr zuverlässige Erfassung und Darstellung eines möglichst hohen Anteils der in der Phosphorschicht enthaltenen Röntgeninformation, selbst bei großen Lagetoleranzen der Phosphorschicht, wobei eine besonders zuverlässige Aufteilung der erfassten Information in Bildinformation und Randinformation bei sehr geringen Informationsverlusten gewährleistet wird.

Hierbei ist bevorzugt, dass der Verlauf der Bildgrenze einer Geraden entspricht, welche an die ermittelten Zeilengrenzen angepasst wird. Durch einen solchen Geradenfit wird eine Mittelung über die einzelnen ermittelten Zeilengrenzen vorgenommen, so dass größere Abweichungen vereinzelter Zeilengrenzen, z.B. im Bereich der Ecken der Phosphorschicht, deutlich weniger die Lage der abgeleiteten Bildgrenze beeinflussen als eine Vielzahl von Zeilengrenzen mit im wesentlichen gleicher oder ähnlicher Position. Darüber hinaus wird durch eine Bildgrenze mit geradem Verlauf eine für das menschliche Auge besonders gut erkennbare Trennung zwischen Bildinformation und Randinformation erreicht, was besonders bei der diagnostischen Analyse von Vorteil ist.

In einer bevorzugten Ausgestaltung des erfindungsgemäßen Verfahrens ist vorgesehen, die Randinformation auf zumindest einen vorgebbaren Wert zu setzen. Bei der Darstellung der Randinformation zusätzlich zur Bildinformation kann hierdurch die Randinformation besonders deutlich von der Bildinformation unterschieden werden. Hierbei, insbesondere bei einer Negativdarstellung der Bild- und Randinformation, ist es besonders vorteilhaft, die Randinformation als dunklen, insbesondere gleichmäßig schwarzen, Bereich darzustellen. Hierdurch wird zusätzlich der Vorteil erzielt, dass die Betrachtung der dargestellten Bildinformation nicht durch eine hell, insbesondere weiß, dargestellte Randinformation beeinträchtigt wird. Wie nämlich Erfahrungen aus der diagnostischen Praxis gezeigt haben, wird die Analyse der dargestellten Bildinformation durch einen zu hellen oder weißen Rand merklich beeinträchtigt. Dadurch, dass die Randinformation auf einen vorgebbaren Wert gesetzt wird und als dunkler, insbesondere gleichmäßig schwarzer, Bereich dargestellt wird, wird neben einer guten Erkennbarkeit des Randes gleichzeitig eine Blendung des Betrachters vermieden.

In einer alternativen Variante dieses Verfahrens wird die Bildinformation, insbesondere in Negativdarstellung, vor einem dunklen, insbesondere gleichmäßig schwarzen, Hintergrund dargestellt. Auf eine zusätzliche Darstellung der Randinformation wird in diesem Fall verzichtet. Durch die Darstellung der Bildinformation vor dem dunklen Hintergrund werden die bereits im Zusammenhang mit der entsprechenden Darstellung der Randinformation beschriebenen Vorteile erzielt.

In einer bevorzugten Weiterbildung der beschriebenen Varianten der Erfindung wird die Randinformation bzw. der Hintergrund, insbesondere in Negativdarstellung, dunkler dargestellt als der dunkelste Bereich der Bildinformation. Hierdurch wird eine Blendung des Betrachters durch einen zu hellen Rand bzw. Hintergrund mit besonders hoher Zuverlässigkeit vermieden.

Eine weitere bevorzugte Ausführung des erfindungsgemäßen Verfahrens sieht vor, dass die Bildinformation und ggf. die Randinformation auf einem Bildschirm oder einem Bildträger, insbesondere in Negativdarstellung, dargestellt wird. Als Bildträger dient vorzugsweise ein transparentes Material, auf welches mittels eines Druckers die erfasste Information aufgedruckt wird, und welches vor einem beleuchteten Hintergrund, einem sogenannten Lichtkasten, betrachtet werden kann.

Die Erfindung wird nachfolgend anhand von Figuren näher erläutert.

Es zeigen:
- Fig. 1: eine Phosphorschicht mit einem darin gespeicherten Röntgenbild;
- Fig. 2: die in Fig. 1 dargestellte Phosphorschicht, welche mit dem erfindungsgemäßen Verfahren gescannt wird;
- Fig. 3: einen Verlauf der bei dem erfindungsgemäßen Verfahren erfassten Information;
- Fig. 4: für einzelne Zeilen bei unterschiedlichen Zeilenpositionen ermittelte Zeilengrenzen;
- Fig. 5: eine Negativdarstellung des in Fig. 3 gezeigten Verlaufs mit auf einen festen Wert gesetzter Randinformation;
- Fig. 6: eine Negativdarstellung der Bildinformation auf einem Bildschirm; und
- Fig. 7: eine Negativdarstellung der Bild- und Randinformation auf einem Bildträger.

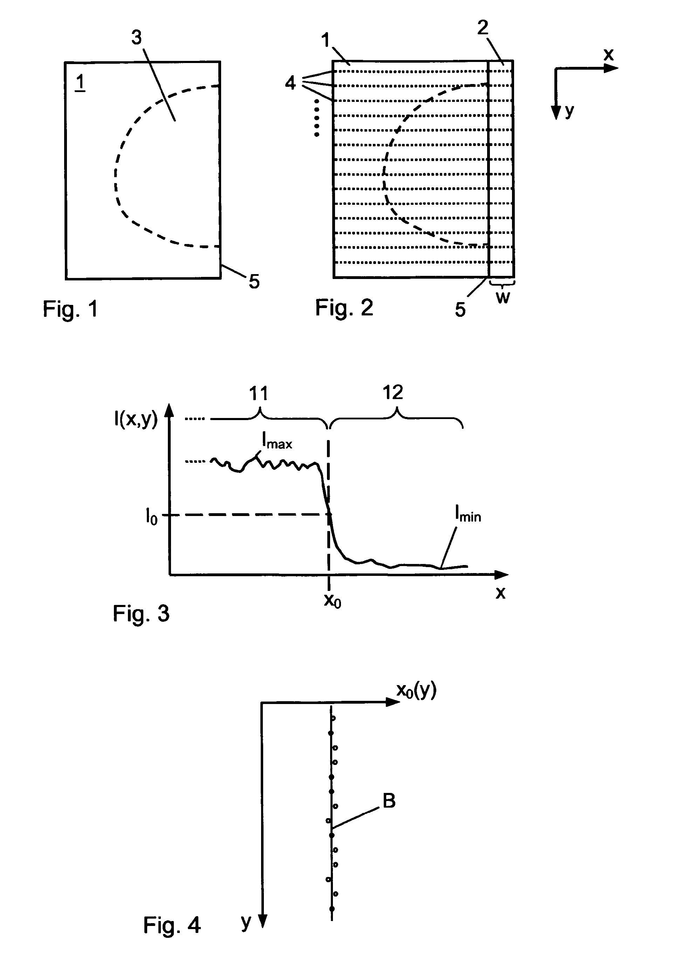

Fig. 1 zeigt eine Phosphorschicht 1, in welcher bei einer Röntgenaufnahme mittels Röntgenstrahlung ein Röntgenbild gespeichert wurde. Im dargestellten Beispiel einer mammographischen Röntgenaufnahme befindet sich die an dem zu untersuchenden Brustgewebe gewonnene Röntgeninformation im Wesentlichen innerhalb des gestrichelt dargestellten Bereichs 3, welcher sich bis zu einem Rand 5 der Phosphorschicht 1 erstreckt. Diese Lage ist dadurch bedingt, dass die Phosphorschicht bei mammographischen Röntgenaufnahmen möglichst nahe am Brustkorb der Patientin angeordnet wird, damit möglichst die gesamte Brust geröntgt wird. Der Rand 5 der Phosphorschicht 1 wird daher häufig als "chest wall side" bezeichnet.

Fig. 2 zeigt die in Fig. 1 dargestellte Phosphorschicht 1, welche mit dem erfindungsgemäßen Verfahren ausgelesen wird. Die Phosphorschicht 1 wird hierbei zeilenweise mit Stimulationslicht bestrahlt und dabei zur Aussendung von Emissionslicht angeregt. Das Emissionslicht, dessen Intensität von der in der Phosphorschicht 1 gespeicherten Röntgeninformation abhängt, wird mit einem optischen Detektor detektiert. Zur zeilenweisen Erfassung der in der Phosphorschicht 1 enthaltenen Röntgeninformation stehen im Wesentlichen zwei Verfahren zur Auswahl:

Bei der in der Patentschrift US 6,501,088 B1 beschriebenen Methode wird das Stimulationslicht in Form eines Laserstrahls an einem rotierenden Spiegel derart abgelenkt, dass der Laserstrahl die Phosphorschicht 1 entlang einer Zeile überstreicht. Gleichzeitig wird das dabei in der Phosphorschicht 1 angeregte Emissionslicht in bestimmten zeitlichen Abständen - und damit ortsabhängig - erfasst. Durch Scannen einer Vielzahl einzelner Zeilen in entsprechender Weise wird schließlich ein zweidimensionales Bild der in der Phosphorschicht 1 gespeicherten Röntgeninformation erhalten.

Bei der in der Patentschrift US 6,373,074 B1 beschriebenen Methode wird ein sogenannter Zeilenscanner verwendet, bei welchem mittels einer Linienlichtquelle jeweils eine ganze Zeile der Phosphorschicht 1 mit Stimulationslicht bestrahlt wird und das von dieser Zeile ausgehende Emissionslicht mit einem linearen Detektorarray erfasst wird.

Im dargestellten Beispiel der Fig. 2 verlaufen die Zeilen, in denen die in der Phosphorschicht 1 enthaltene Röntgeninformation erfasst wird, entlang der in der Figur eingezeichneten Zeilen 4. Alternativ können die Zeilen, in denen die Röntgeninformation erfasst wird, auch senkrecht zu den dargestellten Zeilen 4 verlaufen. In beiden Fällen wird ein zweidimensionales Bild der Röntgeninformation in den Raumrichtungen x und y erhalten. Bei Abmessungen gängiger Phosphorschichten von etwa 18 x 24 cm oder 24 x 30 cm weist ein entsprechendes Bild in der x-Richtung etwa 3600 bzw. 4800 und in der y-Richtung etwa 4600 bzw. 5800 Bildpunkte auf.

Erfindungsgemäß ist vorgesehen, nicht nur die Phosphorschicht 1, sondern auch einen an die Phosphorschicht 1 angrenzenden Bereich 2, welcher außerhalb der Phosphorschicht 1 liegt, zu scannen. Die Breite w dieses Bereichs 2 ist hierbei so gewählt, dass die Phosphorschicht 1 auch bei größeren Lageungenauigkeiten relativ zum Scanner, z.B. infolge von Verdrehung oder Verschiebung der Phosphorschicht 1 bezüglich einer Sollposition, noch innerhalb dieses Bereichs 2 liegt. Typischerweise liegt die Breite w des Bereichs 2 zwischen etwa 1 und 10 mm, insbesondere bei etwa 3 mm. Dieser Breite w entsprechen typischerweise etwa 40 bis 70 Bildpunkte in x-Richtung.

Die hierbei erfasste zweidimensionale Information wird dann in eine Vielzahl von Zeilen 4 unterteilt, welche senkrecht zum Rand 5 der Phosphorschicht 1 verlaufen und damit jeweils zum einen Teil im Bereich der Phosphorschicht 1 und zum anderen Teil im daran angrenzenden Bereich 2 außerhalb der Phosphorschicht 1 liegen. Besteht die erfasste Information beispielsweise aus 3600 mal 4600 einzelnen Bildpunkten in x- bzw. y-Richtung, so ist eine Unterteilung der erfassten Information in maximal 4600 Zeilen 4 möglich. Aus Anschaulichkeitsgründen sind in der Figur 2 nur wenige Zeilen 4 dargestellt.

Fig. 3 zeigt einen Ausschnitt aus einem Verlauf der Information entlang einer Zeile 4 des in Fig. 2 gezeigten Beispiels. Die Information entspricht hierbei der Intensität I(x, y), die an unterschiedlichen Orten x bei einer bestimmten Zeilenposition y erfasst wurde.

Wie dem Verlauf der Intensität I(x, y) zu entnehmen ist, weist dieser einen starken Abfall auf, anhand dessen eine Aufteilung in Bild- und Randinformation wie folgt durchgeführt wird: Eine entsprechende Zeilengrenze x₀ wird für einen Intensitätswert I₀ festgelegt, welcher den Mittelwert zwischen einer maximalen Intensität Iₘₐₓ. und einer minimalen Intensität Iₘᵢₙ im betrachteten Verlauf der Intensität I(x, y) bildet. Damit kann jede Zeile 4 (siehe Fig. 2) in eine Zeilenbildinformation 11 und eine Zeilenrandinformation 12 aufgeteilt werden, welche jeweils durch eine Zeilengrenze x₀ separiert werden.

Vorzugsweise wird bei der Ermittlung der Zeilengrenze x₀ aus der maximalen und minimalen Intensität Iₘₐₓ bzw. Iₘᵢₙ nicht der gesamte Verlauf der erfassten Intensität I(x, y) herangezogen, sondern - wie im Beispiel der Fig. 3 - ein Ausschnitt mit der Breite w zu beiden Seiten des vermuteten Randes 5 der Phosphorschicht 1. Hierdurch wird eine einfache und schnelle Ermittlung der einzelnen Zeilengrenzen x₀ ermöglicht.

Wie nachfolgend im Zusammenhang mit Fig. 4 näher erläutert wird, wird schließlich aus den Zeilengrenzen x₀ eine Bildgrenze abgeleitet, welche die erfasste zweidimensionale Intensität in einen Bereich mit Bild- und Randinformation aufteilt.

Fig. 4 zeigt die für einzelne Zeilen 4 bei jeweils unterschiedlichen Zeilenpositionen y ermittelten Zeilengrenzen x₀(y). Zum Ausgleich von Schwankungen der für die einzelnen Zeilen 4 ermittelten Zeilengrenzen x₀ wird an die Zeilengrenzen x₀ eine Gerade angepasst, die schließlich einer Bildgrenze B entspricht, welche die von der Phosphorschicht 1 erfasste Bildinformation von der aus dem daran angrenzenden Bereich 2 außerhalb der Phosphorschicht 1 erfassten Randinformation trennt.

Vorzugsweise werden die ermittelten Zeilengrenzen x₀(y) vor Anpassung der Geraden auf ihre Güte oder Zuverlässigkeit hin überprüft.

Beispielsweise wird für jede der einzelnen Zeilengrenzen x₀(y) überprüft, ob die jeweilige Differenz zwischen maximaler und minimaler Intensität Iₘₐₓ bzw. Iₘᵢₙ einen vorgebbaren Mindestwert überschreitet. Nur in diesem Fall ist die daraus ermittelte Zeilengrenze ausreichend zuverlässig und wird für die Ableitung der Bildgrenze herangezogen. Zeilengrenzen, die diese Bedingung nicht erfüllen, werden dagegen vor der Ableitung der Bildgrenze eliminiert.

Eine weitere Möglichkeit zur Bestimmung der Güte oder Zuverlässigkeit der ermittelten Zeilengrenzen x₀(y) kann auch in der Berechnung einer mittleren Abweichung der Zeilengrenzen x₀(y) von der angepassten Geraden oder einem Mittelwert liegen. Überschreitet die Abweichung einen vorgebbaren Höchstwert, so werden die entsprechenden Zeilengrenzen x₀(y) eliminiert. Vorzugsweise wird dann auf der Grundlage der verbleibenden Zeilengrenzen x₀(y) ein neuer Geradenfit durchgeführt.

Röntgeninformationen werden zu Analysezwecken häufig in Negativdarstellung wiedergegeben, um eine mit Röntgenfilmaufnahmen vergleichbare Darstellung zu erhalten.

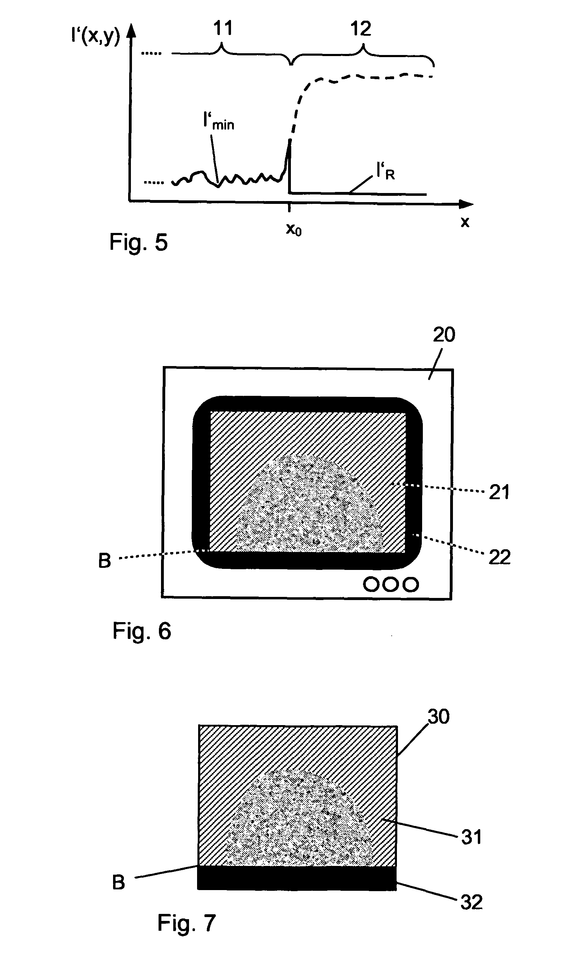

Fig. 5 zeigt eine solche Negativdarstellung des in Fig. 3 gezeigten Verlaufs der erfassten Information mit auf einen festen Wert gesetzter Randinformation. Der dargestellte Verlauf der Information I'(x, y) in Negativdarstellung entspricht hierbei einem um eine horizontale Achse gespiegelten Verlauf der Intensität I(x, y). In dieser Negativdarstellung würde die Randinformation 12 (gestrichelter Verlauf) deutlich heller erscheinen als die Bildinformation 11. Bei einer Darstellung der Bild- und Randinformation 11 und 12 würde der helle Bereich der Randinformation zu einer unerwünschten Blendung des Betrachters führen. Deshalb wird bei dem erfindungsgemäßen Verfahren die Randinformation 12 auf einen festen Wert I'_{R} gesetzt, so dass diese bei deren Darstellung als gleichmäßig dunkler, insbesondere schwarzer, Bereich erscheint. Im dargestellten Beispiel ist zur besonders zuverlässigen Vermeidung von Blendungswirkungen der Wert I'_{R} so gewählt, dass er kleiner ist als die niedrigste Intensität I'ₘᵢₙ im Bereich der Bildinformation 11 in Negativdarstellung: I'_{R} < I'ₘᵢₙ. Dies kann auf einfache Weise erreicht werden, indem die erfasste Intensität I(x, y) nach der Ermittlung der Bildgrenze B im Bereich der Randinformation 12 auf einen möglichst hohen Wert, der insbesondere höher ist als die höchste Intensität Iₘₐₓ im Bereich der Bildinformation 11, gesetzt wird (siehe Fig. 3). Die Randinformation 12 mit diesem Wert erscheint folglich in der Negativdarstellung (siehe Fig. 5) dunkler als die dunkelste Stelle im Bereich der Bildinformation 11.

Fig. 6 zeigt eine Negativdarstellung der bei dem erfindungsgemäßen Verfahren erhaltenen Bildinformation 21 auf einem Bildschirm 20. Die Darstellung erfolgt vor einem dunklen Hintergrund 22, der im gezeigten Beispiel gleichmäßig schwarz ist. Die in der ursprünglich erfassten Information enthaltene Randinformation wurde entlang der Bildgrenze B von der Bildinformation 21 abgetrennt und ist nicht dargestellt. Die wiedergegebene Bildinformation 21 grenzt daher mit der Bildgrenze B direkt an den dunklen Hintergrund 22, wodurch eine Blendung eines Betrachters trotz Negativdarstellung vermieden und somit eine hohe Sicherheit bei der diagnostischen Analyse der Bildinformation 21 gewährleistet wird.

Fig. 7 zeigt eine Negativdarstellung der Bild- und Randinformation auf einem Bildträger 30. Bei dem Bildträger 30 handelt es sich vorzugsweise um ein transparentes Trägermaterial, wie beispielsweise eine Kunststofffolie, auf welches die darzustellende Bild- und Randinformation 31 bzw. 32 ausgegeben, insbesondere aufgedruckt, wird. Durch das erfindungsgemäße Setzen der Randinformation 32 auf einen vorgegebenen Wert - wie im Zusammenhang mit Fig. 5 beschrieben - wird diese bei der vorliegenden Negativdarstellung als gleichmäßig schwarzer Bereich dargestellt. Wird der dargestellte Bildträger 30 zu diagnostischen Zwecken vor einem Lichtkasten angeordnet, so wird die erfindungsgemäß gestaltete Randinformation 32 nicht mehr - wie bei Negativdarstellungen in aus dem Stand der Technik bekannten Verfahren - als blendend und daher störend empfunden. Da insbesondere bei mammographischen Aufnahmen eine Analyse des aufgenommenen Brustgewebes bis hin zum Rand 5 der Phosphorplatte 1 (siehe Fig. 1) bzw. der Bildgrenze B der Bildinformation 31 erfolgen muss, ist ein entsprechend gestalteter, gleichmäßig dunkler Randbereich 32 auf dem Gebiet der Mammographie von besonderem Vorteil.

## Patentansprüche

1. Verfahren zur Erfassung und Darstellung eines in einer Phosphorschicht (1) gespeicherten Röntgenbildes (3) mit folgenden Schritten:
- Erfassung von Information (I(x, y)) im Bereich der Phosphorschicht (1) sowie in einem daran angrenzenden Bereich (2) außerhalb der Phosphorschicht (1) durch einen optischen Detektor, wobei die erfasste information (I (x,y)) durch den Verlauf der Intensität des von dem Detektor erfassten Lichts repräsentiert wird;
- Aufteilung der erfassten Information (I(x, y)) in Bildinformation (11, 21, 31) und Randinformation (12, 32) unter Berücksichtigung des örtlichen Verlaufs der erfassten Information (I(x, y)) wobei
- die erfasste Information (I(x, y)) in eine Vielzahl von Zeilen (4) unterteilt wird,
- für jede der Zeilen (4) eine Zeilengrenze (x₀) ermittelt wird, welche die Information (I(x, y)) in der jeweiligen Zeile (4) in Zeilenbildinformation (11) und Zeilenrandinformation (12) aufteilt, wobei die entsprechenden Zeilengrenzen (x₀) jeweils für einen Intensitätswert (I₀) festgelegt werden, welcher den Mittelwert zwischen einer maximalen Intensität (Iₘₐₓ) und einer minimalen Intensität (Iₘᵢₙ) im betrachteten Verlauf der Information (I(x, y)) bildet, und
- aus den für die einzelnen Zeilen (4) ermittelten Zeilengrenzen (x₀) eine Bildgrenze (B) abgeleitet wird, welche die erfasste Information (I(x, y)) in die Bildinformation (11, 21, 31) und die Randinformation (12, 32) aufteilt, wobei damit die Bildinformation (11, 21, 31) der im Bereich der Phosphorschicht (1) erfassten Information (I(x, y)) und die Randinformation (12, 32) der im daran angrenzenden Bereich (2) außerhalb der Phosphorschicht (1) erfassten Information (I(x, y)) entspricht;
- Darstellung der Bildinformation (11, 21, 31), insbesondere in Negativdarstellung.

2. Verfahren nach Anspruch 1, wobei der Verlauf der Bildgrenze (B) einer Geraden entspricht, welche an die ermittelten Zeilengrenzen (x₀) angepasst wird.

3. Verfahren nach Anspruch 2, wobei vor der Anpassung der Geraden für jede der einzelnen Zeilengrenzen (x₀) überprüft wird, ob die jeweilige Differenz zwischen maximaler (Iₘₐₓ) und minimaler Intensität (Iₘᵢₙ) einen vorgebbaren Mittelwert überschreitet, und nur diejenigen Zeilengrenzen (x₀) für die Ableitung der Bildgrenze (B) herangezogen werden, die diese Bedingung erfüllen.

4. Verfahren nach Anspruch 2, wobei eine mittlere Abweichung der Zeilengrenzen (x₀) von der angepassten Geraden oder einem Mittelwert berechnet wird und Zeilengrenzen eliminiert werden, deren Abweichung einen vorgebbaren Höchstwert überschreitet.

5. Verfahren nach Anspruch 4, wobei auf der Grundlage der verbleibenden Zeilengrenzen (x₀) ein neuer Geradenfit durchgeführt wird.

6. Verfahren nach einem der vorangehenden Ansprüche, wobei die erfasste Randinformation (12, 32) durch zumindest einen vorgebbaren Wert (I'_{R}) ersetzt wird.

7. Verfahren nach Anspruch 6, wobei der vorgebbare Wert (I'_{R}) so gewählt wird, dass die Randinformation (12, 32), insbesondere in Negativdarstellung, als dunkler, insbesondere gleichmäßig schwarzer, Bereich dargestellt wird.

8. Verfahren nach einem der vorangehenden Ansprüche, wobei die Bildinformation (11, 21, 31), insbesondere in Negativdarstellung, vor einem dunklen, insbesondere gleichmäßig schwarzen, Hintergrund (22) dargestellt wird.

9. Verfahren nach einem der vorangehenden Ansprüche, wobei die Randinformation (12) nach der Ermittlung der Bildgrenze (B) durch einen Wert ersetzt wird, welcher höher ist als die höchste Intensität (Iₘₐₓ) im Bereich der Bildinformation (11), wodurch die Randinformation (12) in Negativdarstellung dunkler dargestellt wird als der dunkelste Bereich (I'ₘᵢₙ) der Bildinformation(11, 21, 31).

10. Verfahren nach einem der vorangehenden Ansprüche, wobei die Bildinformation (11, 21, 31) und/oder Randinformation (12, 32) auf einem Bildschirm (20) oder einem Bildträger (30), insbesondere in Negativdarstellung, dargestellt wird.

## Claims

1. A process for capturing and presenting an X-ray image (3) stored in a phosphor layer (1) comprising the following steps:
- capturing information (I(x, y)) in the area of the phosphor layer (1) and in an area adjacent to it (2), outside the phosphor layer (1), by means of an optical detector, the information captured (I(x, y)) being represented by the run of the intensity of the light captured by the detector;
- splitting the information captured (I(x, y)) into image information (11, 21, 31) and edge information (12, 32) taking into account the local run of the information captured (I (x, y)),
wherein
- the information captured (I(x, y)) is divided into a plurality of lines (4),
- for each of the lines (4) a line limit (x₀) is determined which splits the information (I(x, y)) in the respective line (4) into line image information (11) and line edge information (12), the corresponding line limits (x₀) being established respectively for an intensity value (I₀) which forms the average between a maximum intensity (Iₘₐₓ) and a minimum intensity (Iₘᵢₙ) in the run of the information (I(x, y)) observed, and
- from the line limits (x₀) determined for the individual lines (4) an image limit (B) is deduced which splits the information captured (I(x, y)) into the image information (11, 21, 31) and the edge information (12, 32), the image information (11, 21, 31) corresponding in consequence to the information captured (I(x, y)) in the area of the phosphor layer (1) and the edge information (12, 32) corresponding in consequence to the information captured (I(x, y)) in the area adjacent to it (2) outside the phosphor layer (1);
- presenting the image information (11, 21, 31), in particular in a negative presentation.

2. Process according to claim 1, wherein the run of the image limit (B) corresponds to a straight line which is fitted to the line limits (x₀) determined.

3. Process according to claim 2, wherein before the fitting of the straight line for each of the individual line limits (x₀) it is checked whether the respective difference between the maximum intensity (Iₘₐₓ) and the minimum intensity (Iₘᵢₙ) exceeds a pre-specifiable average and only those line limits (x₀) which fulfil this condition are used for deducing the image limit (B).

4. Process according to claim 2, wherein an average deviation of the line limits (x₀) from the fitted straight line or from an average is calculated and those line limits are eliminated the deviation of which exceeds a pre-specifiable maximum value.

5. Process according to claim 4, wherein a new straight line fit is carried out upon the basis of the remaining line limits (x₀).

6. Process according to any of the preceding claims, wherein the edge information (12, 32) captured is replaced by at least one pre-specifiable value (I'_{R}).

7. Process according to claim 6, wherein the pre-specifiable value (I'_{R}) is chosen such that the edge information (12, 32) is presented as a dark, in particular evenly black area, in particular in a negative presentation.

8. Process according to any of the preceding claims, wherein the image information (11, 21, 31) is presented against a dark, in particular an evenly black background (22), in particular in a negative presentation.

9. Process according to any of the preceding claims, wherein after the determination of the image limit (B) the edge information (12) is replaced by a value which is higher than the highest intensity (Iₘₐₓ) in the area of the image information (11), as a result of which the edge information (12) is presented darker than the darkest area (I'ₘᵢₙ) of the image information (11, 21, 31) in a negative presentation.

10. Process according to any of the preceding claims, wherein the image information (11, 21, 31) and/or the edge information (12, 32) are presented on a screen (20) or on an image carrier (30), in particular in a negative presentation.

## Revendications

1. Procédé de détection et d'affichage d'une image radiographique (3) mémorisée dans une couche à base de phosphore (1), comportant les étapes suivantes :
- détection par un détecteur optique d'une information (I (x, y)) dans la zone de la couche à base de phosphore (1), ainsi que dans une zone (2) adjacente située en dehors de la couche à base de phosphore (1), l'information (I (x, y)) détectée étant représentée par la courbe de l'intensité de la lumière détectée par le détecteur ;
- répartition de l'information (I (x, y)) détectée en information d'image (11, 21, 31) et en information de bord (12, 32) en tenant compte de la courbe locale de l'information (I (x, y)) détectée ;
étant précisé que :
- l'information (I (x, y)) détectée est subdivisée en une pluralité de lignes (4),
- une limite de ligne (x₀), qui répartit l'information (I (x, y)) dans la ligne (4) respective en information d'image de ligne (11) et en information de bord de ligne (12), est déterminée pour chacune des lignes (4), les limites de ligne (x₀) correspondantes étant respectivement définies pour une valeur d'intensité (I₀) qui représente la valeur moyenne entre une intensité maximale (Iₘₐₓ) et une intensité minimale (Iₘᵢₙ) dans la courbe considérée de l'information (I (x, y)), et
- des limites de ligne (x₀) déterminées pour les lignes individuelles (4) est dérivée une limite d'image (B), qui répartit l'information (I (x, y)) détectée en l'information d'image (11, 21, 31) et en l'information de bord (12, 32), l'information d'image (11, 21, 31) correspondant alors à l'information (I (x, y)) détectée dans la zone de la couche à base de phosphore (1), et l'information de bord (12, 32) à l'information (I (x, y)) détectée dans la zone (2) adjacente située en dehors de la couche à base de phosphore (1) ;
- affichage de l'information d'image (11, 21, 31), notamment en affichage négatif.

2. Procédé selon la revendication 1, dans lequel la courbe de la limite d'image (B) correspond à une droite qui est adaptée aux limites de ligne (x₀) déterminées.

3. Procédé selon la revendication 2, dans lequel, avant l'adaptation de la droite, il est vérifié pour chacune des limites de ligne (x₀) individuelles si la différence respective entre l'intensité maximale (Iₘₐₓ) et l'intensité minimale (Iₘᵢₙ) dépasse une valeur moyenne pouvant être prédéterminée, et seules les limites de ligne (x₀) remplissant cette condition étant utilisées pour la dérivation de la limite d'image (B).

4. Procédé selon la revendication 2, dans lequel est calculé un écart moyen ou une valeur moyenne des limites de ligne (x₀) par rapport à la droite adaptée, et sont éliminées des limites de ligne dont l'écart dépasse une valeur maximale pouvant être prédéterminée.

5. Procédé selon la revendication 4, dans lequel une nouvelle adaptation de droite est effectuée sur la base des limites de ligne (x₀) restantes.

6. Procédé selon l'une des revendications précédentes, dans lequel l'information de bord (12, 32) détectée est remplacée par au moins une valeur (I'_{R}) pouvant être prédéterminée.

7. Procédé selon la revendication 6, dans lequel la valeur (I'_{R}) pouvant être prédéterminée est choisie de telle sorte que l'information de bord (12, 32) soit affichée, notamment en affichage négatif, sous la forme d'une zone sombre, notamment uniformément noire.

8. Procédé selon l'une des revendications précédentes, dans lequel l'information d'image (11, 21, 31) est représentée, notamment en affichage négatif, devant un fond sombre (22), notamment uniformément noir.

9. Procédé selon l'une des revendications précédentes, dans lequel l'information de bord (12) est remplacée après la détermination de la limite d'image (B) par une valeur qui est supérieure à l'intensité maximale (Iₘₐₓ) dans la zone de l'information d'image (11), moyen par lequel l'information de bord (12) est représentée en affichage négatif plus sombre que la zone (I'ₘᵢₙ) la plus sombre de l'information d'image (11, 21, 31).

10. Procédé selon l'une des revendications précédentes, dans lequel l'information d'image (11, 21, 31) et/ou l'information de bord (12, 32) sont représentées sur un écran (20) ou un support d'images (30), notamment en affichage négatif.
